# EUROPEAN PATENT APPLICATION

(11) **EP 4 474 132 A1**
(43) Date of publication of application: **11.12.2024**
(21) Application number: 23749646.8
(22) Date of filing: 26.01.2023
(51) Int. Cl.: B29C 49/64, B29C 49/06

(54) **TEMPERATURE REGULATING MOLD, AND DEVICE AND METHOD FOR PRODUCING RESIN CONTAINER**

(30) Priority: 01.02.2022 JP 2022014048
(71) Applicant: Nissei ASB Machine Co., Ltd., Komoro-shi, Nagano 384-8585 (JP)
(72) Inventor: OGIHARA, Manabu, Komoro-Shi, Nagano 384-8585 (JP); TAKAHASHI, Junji, Komoro-Shi, Nagano 384-8585 (JP)
(74) Representative: Mewburn Ellis LLP
(86) International application number: PCT/JP2023/002419
(87) International publication number: WO 2023/149330

(57) **Abstract**

A temperature adjustment mold includes: an air introduction unit that is inserted into a preform and cools the preform by introducing compressed air into an interior of the preform; and a cavity mold that accommodates the preform inside and performs heat exchange in contact with an outer peripheral surface of the preform into which the compressed air has been introduced. The air introduction unit includes: an inner pipe that exhausts compressed air from the preform; an outer pipe that is disposed on an outer periphery of the inner pipe and forms an air supply port for supplying compressed air to the preform between the outer pipe and the inner pipe; and a positioning portion that is formed on the outer periphery of the inner pipe and causes an axial center of the inner pipe to be eccentric with respect to an axial center of the outer pipe to change an opening width of the air supply port in a circumferential direction.

## Description

### Technical Field

The present invention relates to a temperature adjustment mold, and a manufacturing apparatus and a manufacturing method for a resin container.

### Background Art

Conventionally, a hot parison type blow-molding apparatus has been known as one of manufacturing apparatuses for a resin container. The hot parison type blow-molding apparatus is configured to blow-mold a resin container using residual heat from injection molding of a preform, and is advantageous in that it is possible to manufacture a resin container which is diversified and excellent in aesthetic appearance as compared with a cold parison type.

In order to shorten the hot parison type molding cycle, for example, it has also been proposed to shorten the injection-molding time of the preform, which is the ratedetermining stage (for example, the cooling time of the preform in the injection mold performed after injection time (resin filling)), and to additionally cool the preform at high temperature in the temperature adjustment step after injection molding.

Furthermore, as a method of additional cooling of the preform, a method is also known in which an outer peripheral surface of the preform is brought into contact with a cooling mold in the temperature adjustment step to perform heat exchange, and compressed air is caused to flow into the preform to cool the preform (see Patent Literature 1 to 3) .

### Citation List

### Patent Literature

Patent Literature 1: JP 6505344 B2
Patent Literature 2: WO 2020/158918 A
Patent Literature 3: JP 2509042 B2

### Summary of Invention

### Technical Problem

For example, in a case where a concave and convex structure such as braille is formed at a specific portion in the circumferential direction of the outer surface of the body portion of the container, it is preferable to perform adjustment such that the specific portion is hardly stretched at the initial stage of the blow molding and the specific portion is stretched at the second half stage of the blow molding. For example, it is desirable that a specific portion in the circumferential direction of the preform, which is a corresponding position of the concave and convex structure of the container, is adjusted to a state of being thicker than other portions and having residual heat sufficient for shaping at the time of being blown and coming into contact with the blow mold. In order to realize the above stretching, it is necessary to selectively decrease the temperature or the amount of residual heat at a specific portion of the preform in the temperature adjustment step (that is, the temperature of the specific portion or the amount of residual heat is relatively lowered compared to other portions.).

Furthermore, even in the case of improving the uneven thickness of the container body portion in the circumferential direction, it is desired to adjust the temperature of the specific portion in the circumferential direction of the preform in the temperature adjustment step.

However, in this type of additional cooling of the preform, it is difficult to selectively adjust the temperature of the specific portion in the circumferential direction of the preform.

Therefore, the present invention has been made in view of such problems, and an object of the present invention is to provide a temperature adjustment mold capable of adjusting the temperature of a specific portion in the circumferential direction of a preform when air cooling is performed in a temperature adjustment step.

### Solution to Problem

One aspect of the present invention is a temperature adjustment mold for adjusting a temperature of an injection-molded bottomed preform made of resin. A temperature adjustment mold includes: an air introduction unit that is inserted into a preform and cools the preform by introducing compressed air into an interior of the preform; and a cavity mold that accommodates the preform inside and performs heat exchange in contact with an outer peripheral surface of the preform into which the compressed air has been introduced. The air introduction unit includes: an inner pipe that exhausts compressed air from the preform; an outer pipe that is disposed on an outer periphery of the inner pipe and forms an air supply port for supplying compressed air to the preform between the outer pipe and the inner pipe; and a positioning portion that is formed on the outer periphery of the inner pipe and causes an axial center of the inner pipe to be eccentric with respect to an axial center of the outer pipe to change an opening width of the air supply port in a circumferential direction.

### Advantageous Effects of Invention

According to one aspect of the present invention, it is possible to provide a temperature adjustment mold capable of adjusting the temperature of a specific portion in the circumferential direction of a preform when air cooling is performed in a temperature adjustment step.

### Brief Description of Drawings

Fig. 1 is a view schematically illustrating a configuration of a blow-molding apparatus according to the present embodiment.
Fig. 2 is a longitudinal sectional view illustrating a configuration example of a temperature adjustment unit.
Fig. 3 is a longitudinal sectional view illustrating a state in which an inner pipe is changed from that in Fig. 2.
Fig. 4(a) is a cross-sectional view taken along line A-A of Fig. 2, and Fig. 4(b) is a cross-sectional view taken along line B-B of Fig. 3.
Fig. 5 is a view illustrating a modification of the inner pipe of Fig. 4(b).
Fig. 6 is a flowchart showing steps of a blow-molding method.

### Description of Embodiments

Hereinafter, embodiments of the present invention will be described with reference to the drawings.

In the embodiments, for ease of description, structures and elements other than the main parts of the present invention will be described in a simplified or omitted manner. Furthermore, in the drawings, the same elements are denoted by the same reference numerals. Shapes, dimensions, and the like of each element depicted in the drawings are schematically illustrated, and do not indicate actual shapes, dimensions, and the like.

### (Description of blow-molding apparatus)

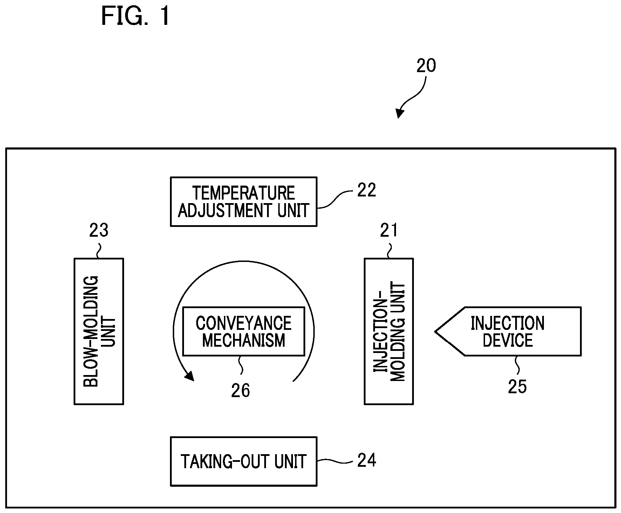

Fig. 1 is a view schematically illustrating a configuration of a blow-molding apparatus 20 according to the present embodiment. The blow-molding apparatus 20 according to the present embodiment is a hot parison type (also referred to as a one-stage type) apparatus that blow-molds a container by utilizing residual heat (internal heat amount, heat amount) from injection molding without cooling a preform to room temperature.

The blow-molding apparatus 20 includes an injection-molding unit 21, a temperature adjustment unit 22, a blow-molding unit 23, a taking-out unit 24, and a conveyance mechanism 26. The injection-molding unit 21, the temperature adjustment unit 22, the blow-molding unit 23, and the taking-out unit 24 are disposed at positions rotated by a predetermined angle (for example, 90 degrees) about the conveyance mechanism 26.

The conveyance mechanism 26 includes a transfer plate 28 (not illustrated in Fig. 1) that moves so as to rotate about an axis in a direction perpendicular to the paper surface of Fig. 1. On the transfer plate 28, one or more neck molds 27 (or neck-mold fixing plates holding one or more neck molds, both of which are not illustrated in Fig. 1) for holding a preform 10 or a neck portion 11 of the container are disposed at each predetermined angle (for example, for each molding portion). The conveyance mechanism 26 conveys the preform 10 (or the container) having the neck portion 11 held by the neck mold 27 in the order of the injection-molding unit 21, the temperature adjustment unit 22, the blow-molding unit 23, and the taking-out unit 24 by moving the transfer plate 28 by 90 degrees. Note that the conveyance mechanism 26 further includes a mold opening mechanism of the neck mold 27 and the like.

### (Injection-molding unit 21)

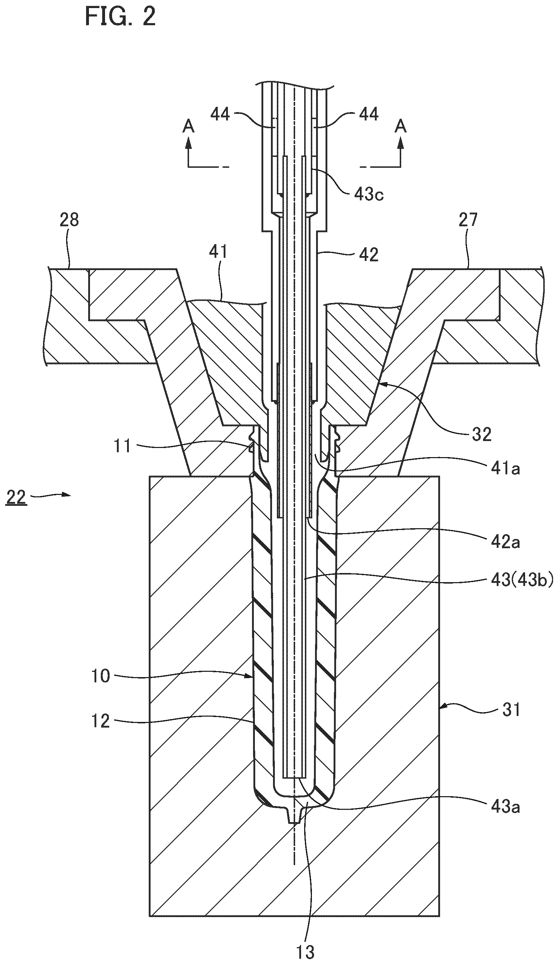

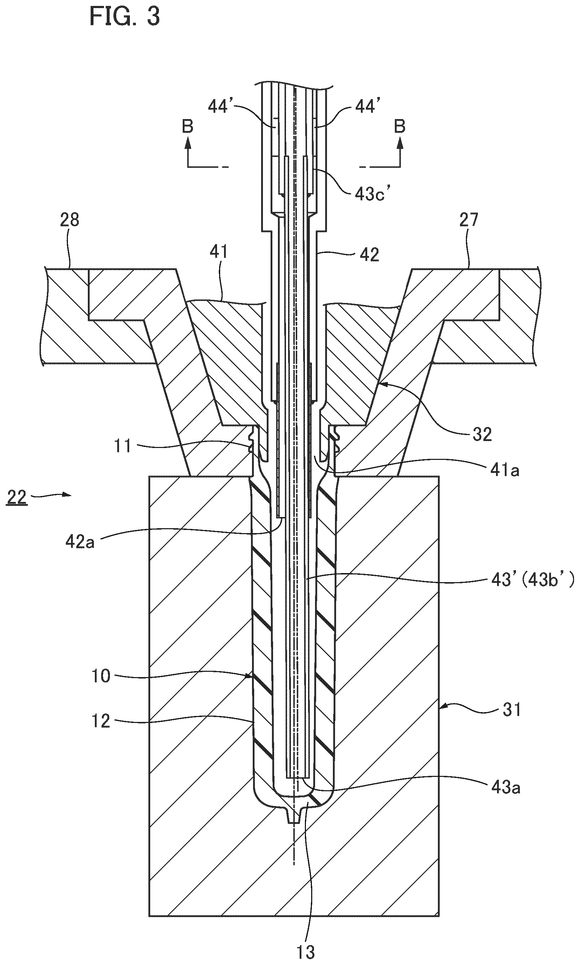

The injection-molding unit 21 includes an injection cavity mold and an injection core mold (which are not illustrated), and manufactures the preform 10 illustrated in Figs. 2 and 3 to be described later. An injection device 25 that supplies a resin material, which is a raw material of the preform 10, is connected to the injection-molding unit 21.

In the injection-molding unit 21, the injection cavity mold, the injection core mold, and the neck mold 27 of the conveyance mechanism 26 are closed to form a preform-shaped mold space. Then, by pouring the resin material from the injection device 25 into the mold space having such a preform shape, the preform 10 is manufactured by the injection-molding unit 21.

Here, the entire shape of the preform 10 is a bottomed cylindrical shape in which one end side is opened and the other end side is closed. As illustrated in Figs. 2 and 3 described later, the preform 10 includes the neck portion 11 formed on one end side and having an opening, a body portion 12 connected to the neck portion 11 and formed in a cylindrical shape, and a bottom portion 13 connected to the body portion 12 and closing the other end side.

Furthermore, the material of the container and the preform 10 is a thermoplastic synthetic resin, and can be appropriately selected according to the use of the container. Specific examples of the material include polyethylene terephthalate (PET), polyethylene naphthalate (PEN), polycyclohexanedimethylene terephthalate (PCTA), Tritan ((registered trademark): co-polyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate: acrylic (PMMA), polylactic acid (PLA), and the like. The material of the preform 10 and the container in the present application is preferably PET.

Even when the injection-molding unit 21 is mold-opened, the neck mold 27 of the conveyance mechanism 26 is not opened, and the preform 10 is held and conveyed as it is. The number of the preforms 10 simultaneously molded by the injection-molding unit 21 (that is, the number of containers that can be simultaneously molded by the blow-molding apparatus 20) can be appropriately set.

### (Temperature adjustment unit 22)

The temperature adjustment unit 22 performs temperature equalization and removal of uneven temperature of the preform 10 manufactured by the injection-molding unit 21, and adjusts the temperature of the preform 10 so as to have a temperature suitable for blow molding (for example, about 90°C to 105°C) and a temperature distribution suitable for a container shape to be shaped. The temperature adjustment unit 22 also has a function of cooling the preform 10 in a high temperature state after injection molding. In a case where the preform 10 is made of PET, the temperature of the outer surface of the body portion 12 of the preform 10 is 120°C to 160°C at the time of high temperature release in the injection-molding unit 21 or at the time of loading into the temperature adjustment unit 22, and the temperature of the inner portion than the outer surface of the body portion 12 becomes still higher. Since crystallization (whitening) occurs when PET in this temperature zone is slowly cooled, it is necessary to suppress whitening by rapidly cooling the preform 10 by the temperature adjustment unit 22.

Figs. 2 and 3 are longitudinal sectional views illustrating configuration examples of the temperature adjustment unit 22. The temperature adjustment unit 22 illustrated in Fig. 2 includes a cavity mold (temperature adjustment pot) 31 capable of accommodating the preform 10, and an air introduction member (also referred to as air introduction/discharge member) 32 as an example of a temperature adjustment mold.

The cavity mold 31 is a mold having a temperature adjustment space capable of accommodating the body portion 12 of the preform 10 manufactured by the injection-molding unit 21. The cavity mold 31 accommodates the body portion 12 and the bottom portion 13 of the preform 10 in the temperature adjustment space. The bottom surface of the neck mold 27 holding the neck portion 11 of the preform 10 abuts on the upper surface of the cavity mold 31. Note that the temperature adjustment space may be the same as or different from the appearance shape of the body portion 12 of the preform 10. Examples of the case where the temperature adjustment space of the cavity mold 31 and the appearance shape of the body portion 12 are different from each other include a case where the size of the temperature adjustment space is larger than the size of the body portion 12 of the preform 10.

A flow path (not illustrated) through which a temperature adjustment medium (refrigerant) flows is formed in an interior of the cavity mold 31. Therefore, the temperature of the cavity mold 31 is maintained at a predetermined temperature by the temperature adjustment medium. Note that the temperature of the temperature adjustment medium of the cavity mold 31 is not particularly limited, but can be appropriately selected within a range of, for example, 5°C to 90°C, preferably 30°C to 80°C.

The air introduction member 32 is a member that introduces and exhausts compressed air into and from the preform 10, and has a triple pipe structure in which an outer pipe 42 and an inner pipe 43 are concentrically inserted inside a cylindrical fitting core 41.

The fitting core 41 is a mold to be inserted inside the neck mold 27. The fitting core 41 is in close contact with the inner periphery or the upper end surface of the neck portion 11 of the preform 10 in a state of being inserted into the neck mold 27, and maintains airtightness between the preform 10 and the air introduction member 32. Furthermore, a circular opening (hollow space) into which the outer pipe 42 can be inserted is formed inside the fitting core 41 along the axial direction. The inner diameter of the opening of the fitting core 41 is larger than the outer diameter of the outer pipe 42.

The outer pipe 42 is a tubular body that is held in a state of being inserted into the opening of the fitting core 41, and forms a flow path of compressed air between the outer pipe and the fitting core 41. When the air introduction member 32 is inserted into the preform 10, the distal end of the outer pipe 42 is disposed below the neck portion 11 and closer to the upper side of the body portion 12. Note that, in the present embodiment, the flow path between the fitting core 41 and the outer pipe 42 is used for exhausting the compressed air.

The inner pipe 43 is a tubular body interchangeably inserted inside the outer pipe 42 or inserted so as to adjust a gap from the outer pipe 42, and an outer diameter thereof is smaller than an inner diameter of the outer pipe 42. The inner pipe 43 forms a flow path of compressed air between the outer pipe 42 and the inner pipe 43, and in the interior of the inner pipe 43.

Note that, in the present embodiment, the flow path between the outer pipe 42 and the inner pipe 43 is used for supplying compressed air, and the flow path in the interior of the inner pipe 43 is used for exhausting the compressed air.

The inner pipe 43 includes a distal end portion 43b having a small diameter to be inserted into the preform 10, and a base portion 43c connected to the proximal end side of the distal end portion 43b and having a larger diameter than the distal end portion 43b.

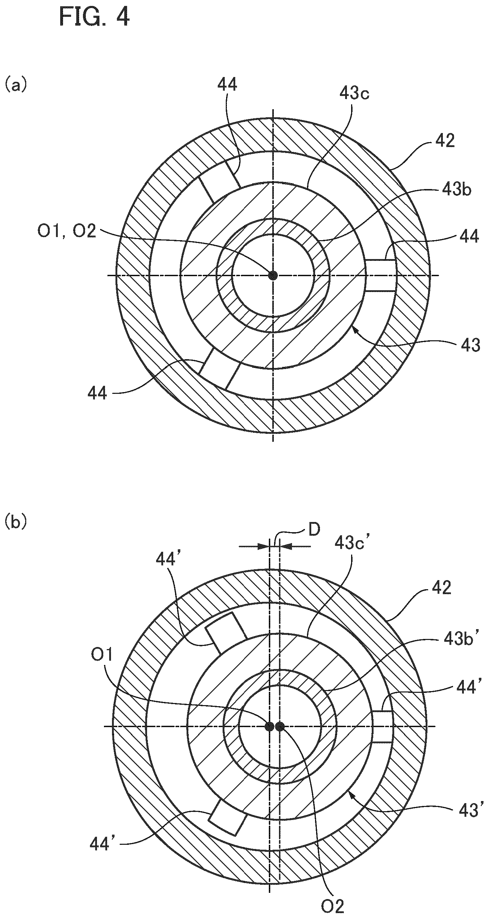

Furthermore, on the outer periphery of the base portion 43c of the inner pipe 43, a plurality of spacers 44 protruding in the radial direction and in contact with the inner periphery of the outer pipe 42 is provided. As illustrated in Figs. 4(a) and 4(b), for example, three spacers (position adjustment portion, projected portion) 44 are disposed at intervals of 120 degrees in the circumferential direction, and are in partial contact with the inner periphery of the outer pipe 42. As a result, the spacers 44 position the distal end portion 43b of the inner pipe 43 connected to the base portion 43c and hold the distal end portion 43b inside the outer pipe 42 without closing the space (the flow path of the compressed air) between the base portion 43c of the inner pipe 43 and the outer pipe 42. Note that the spacer 44 is an example of the positioning portion.

In the temperature adjustment unit 22, compressed air is introduced into the preform 10 through the opening 42a of the outer pipe 42 at the time of cooling blow. Then, the compressed air introduced into the preform 10 is exhausted from the opening 41a of the fitting core 41 and the opening 43a of the distal end portion 43b of the inner pipe 43. The opening 42a of the outer pipe 42 is an example of an air supply port.

As a result, in the preform 10, a flow of compressed air from the opening 42a of the outer pipe 42 toward the neck portion 11 and a flow of compressed air from the opening 42a of the outer pipe 42 toward the bottom portion 13 are generated, and the preform 10 is cooled from the inside by these flows of compressed air.

Furthermore, in the present embodiment, an eccentricity amount of the distal end portion 43b of the inner pipe 43 with respect to the outer pipe 42 can be adjusted. Specifically, the inner pipe 43 including the plurality of spacers 44 having different protruding amounts in the radial direction is prepared. Then, by changing the spacer abutting on the outer pipe 42, the distal end portion 43b of the inner pipe 43 inserted and disposed in the outer pipe 42 is moved in the radial direction to adjust the eccentricity amount. After the eccentricity amount is adjusted, the inner pipe 43 and the outer pipe 42 are connected by a fixing portion (not illustrated) provided above each pipe so as not to be displaced.

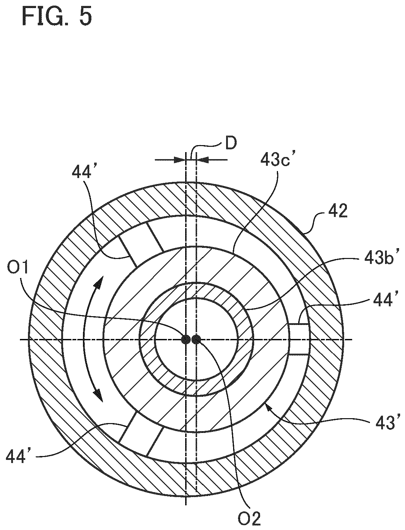

Furthermore, when the eccentricity amount of the distal end portion 43b of the inner pipe 43 with respect to the outer pipe 42 is adjusted, the eccentricity amount of the distal end portion 43b of the inner pipe 43 may be adjusted with respect to the outer pipe 42 by preparing a plurality of inner pipes 43 having different protruding amounts of the spacers 44 in the radial direction and replacing the inner pipe 43 to be inserted into the outer pipe 42 (see Fig. 5).

Figs. 2 and 3 illustrate examples in which different inner pipes 43 and 43' are inserted into the outer pipe 42. Furthermore, Fig. 4(a) is a cross-sectional view taken along line A-A of Fig. 2, and Fig. 4(b) is a cross-sectional view taken along line B-B of Fig. 3.

As illustrated in Fig. 4(a), the inner pipe 43 of Fig. 2 is configured such that the protruding amounts of the spacers 44 in the radial direction are uniform. Therefore, the distal end portion 43b of the inner pipe 43 is concentrically disposed such that an axial center O2 coincides with an axial center O1 of the outer pipe 42. In this case, as illustrated in Fig. 2, the distal end portion 43b of the inner pipe 43 is located at the center with respect to the outer pipe 42, and a distance in the radial direction between the outer pipe 42 and the distal end portion 43b of the inner pipe 43 is substantially the same in the circumferential direction. That is, the compressed air in the opening 42a of the outer pipe 42 flows evenly in the circumferential direction.

On the other hand, the inner pipe 43' in Fig. 3 is an aspect of the inner pipe 43, and as illustrated in Fig. 4(b), the protruding amounts of spacers 44' in the radial direction are non-uniform, and the protruding amount of the spacer 44' on the right side in the drawing is relatively smaller than the other. Here, by rotating or horizontally moving the inner pipe 43' with respect to the outer pipe 42, the spacers 44' having small protruding amounts are abutted against the inner peripheral surface of the outer pipe 42 and are disposed to be biased to the right in the drawing. Then, as the inner pipe 43' moves in the radial direction, a deviation D occurs between the axial center O2 of the inner pipe 43' and the axial center O1 of the outer pipe 42. In this case, as illustrated in Fig. 3, a distal end portion 43b' of the inner pipe 43' is located on the right side in Fig. 3 with respect to the outer pipe 42, and the distance in the radial direction between the outer pipe 42 and the distal end portion 43b' of the inner pipe 43' is the maximum on the left side (the opposite side of the deviation D) in Fig. 3 and decreases toward the right side (the deviation D side) in Fig. 3. That is, since the compressed air flows more on the left side of Fig. 3 in the opening 42a of the outer pipe 42, the flow of the compressed air in the opening 42a of the outer pipe 42 is biased in the circumferential direction.

By forming the deviation D described above, it is possible to locally form a portion where the flow rate of the compressed air increases by increasing the gap between the distal end portion 43b' of the inner pipe 43' and the outer pipe 44. By aligning the portion of the opening portion 42a and a specific portion of the body portion 12 of the preform 10 where it is desired to reduce the temperature or the amount of residual heat in the preform in the circumferential direction, it is possible to realize appropriate temperature adjustment which has been difficult in the related art. Note that, in a case where three spacers 44' are provided in the inner pipe 43', the length of at least one spacer 44' may be shorter in the radial direction than the other two spacers, and the remaining two spacers 44' may be longer in the radial direction than the short spacers. At this time, the lengths of the two spacers 44' in the radial direction may be the same.

Furthermore, the plurality of spacers 44' may be configured such that all the protruding amounts in the radial direction are different. For example, the axial center O2 of the distal end portion 43b' of the inner pipe 43' and the axial center O1 of the outer pipe 42 may be made concentric by causing the spacer 44' having the largest protruding amount in the radial direction abut against the inner peripheral surface of the outer pipe 42, and the deviation D between the axial center O2 of the distal end portion 43b' of the inner pipe 43' and the axial center O1 of the outer pipe 42 may be adjusted by causing the spacers 44' having different protruding amounts in the radial direction abut against the inner peripheral surface of the outer pipe 42. Furthermore, it may be configured such that the protruding amounts of the spacers 44' in the radial direction are non-uniform, and all the spacers 44' abut on the inner peripheral surface of the outer pipe 42. As a result, even when the inner pipe 43' having different protruding amounts of the spacers 44' in the radial direction is inserted into the outer pipe 42 (even if the inner pipe 43' is replaced), the inner pipe 43' is disposed to be biased to the right in the drawing with respect to the outer pipe 42, and the deviation D occurs between the axial center O2 of the inner pipe 43' and the axial center O1 of the outer pipe 42. As a result, the flow rate of the compressed air from the opening 42a in which the deviation D is formed can be adjusted, the cooling strength of the preform 10 can be adjusted, and the flexibility is enhanced.

Fig. 5 illustrates a configuration example in a case where the eccentricity amount is adjusted by replacing the inner pipe 43' as a modification of the inner pipe 43' illustrated in Fig. 4(b). In the inner pipe 43' illustrated in Fig. 5, among the three spacers 44', the protruding amount of the spacer 44' on the right side in the drawing is relatively small, the lengths of the remaining spacers 44' are equal, and all the spacers 44' abut on the inner peripheral surface of the outer pipe 42. Also in the configuration of Fig. 5, similarly to Fig. 4(b), the deviation D occurs between the axial center O2 of the inner pipe 43' and the axial center O1 of the outer pipe 42. Note that, in the configuration of Fig. 5, the size of the deviation D is adjusted by replacing the spacer 44' with another inner pipe 43' having a different protruding amount.

In the case of the configuration of Fig. 5, the spacers 44' all abut on the outer pipe 42, and the inner pipe 43' is stably supported in an eccentric state by these spacers 44', so that the positioning accuracy of the inner pipe 43' is improved. Furthermore, in the configuration of Fig. 5, as indicated by a double-headed arrow in the figure, by rotating the inner pipe 43' with respect to the outer pipe 42, it is also easy to adjust a portion where the deviation D occurs (that is, a place where a wide gap is formed between the outer pipe 42 and the inner pipe 43') in the circumferential direction.

### (Blow-molding unit 23)

Returning to Fig. 1, the blow-molding unit 23 performs stretch blow-molding on the preform 10 whose temperature has been adjusted by the temperature adjustment unit 22 to manufacture a container.

The blow-molding unit 23 includes a blow cavity mold which is a pair of split molds corresponding to the shape of the container, a bottom mold, a stretching rod, and an air introduction member (blow core mold, both of which are not illustrated) for blow air supply. The blow-molding unit 23 blow-molds the preform 10 while stretching the preform. As a result, the preform 10 is shaped into the shape of the blow-cavity mold, and a container can be manufactured.

### (Taking-out unit 24)

The taking-out unit 24 is configured to release the neck portion of the container manufactured by the blow-molding unit 23 from the neck mold 27 and take out the container to the outside of the blow-molding apparatus 20.

### (Description of blow-molding method)

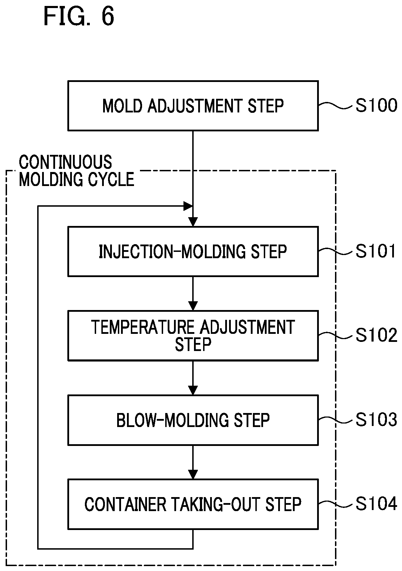

Next, a blow-molding method by the blow-molding apparatus of the present embodiment will be described. Fig. 6 is a flowchart showing steps of a blow-molding method. In the present embodiment, a mold adjustment step (S100) is performed before respective steps (S101 to S104) described later of the blow-molding method are performed.

### (Step S100: Mold adjustment step)

The mold adjustment step is a step of adjusting the eccentricity amount of the inner pipe 43 with respect to the outer pipe 42 of the temperature adjustment unit 22 according to the shape of the container to be shaped or the like. As an example, the following operation is performed in the mold adjustment step.

First, the blow-molding apparatus 20 performs test molding to obtain information on the container shape before adjustment. For example, at the time of test molding, as illustrated in Fig. 2, the temperature adjustment unit 22 makes the axial center O1 of the outer pipe 42 and the axial center O2 of the inner pipe 43 coincide with each other. The blow-molding apparatus 20 is operated in the above state to obtain information on the temperature distribution of the preform 10 or the wall thickness distribution of the container before adjustment. Alternatively, in a case where there is a concave and convex structure such as braille at a specific portion in the circumferential direction of the container, shape information of the concave and convex structure (information regarding whether or not formability is good) may be obtained.

As a result of the above test operation, when it is necessary to adjust the temperature distribution of the preform 10 and the wall thickness distribution of the container, the eccentricity amount of the inner pipe 43 with respect to the outer pipe 42 is adjusted by moving the inner pipe 43 of the temperature adjustment unit 22 with respect to the outer pipe 42 or replacing the inner pipe 43.

Specifically, the inner pipe is moved such that the spacer 44 having an appropriate protruding amount abuts on the inner peripheral surface of the outer pipe 44, or the inner pipe is replaced with a spacer 44 having a different shape. As a result, the axial center O2 of the distal end portion 43b of the inner pipe 43 is caused to be eccentric with respect to the axial center O1 of the outer pipe 42, and the opening amount of the opening 42 of the outer pipe 42 is changed in the circumferential direction.

Here, in a case of suppressing unevenness of the temperature distribution in the circumferential direction of the preform 10, the mold is adjusted such that a specific portion having a high temperature of the preform 10 faces a portion where the opening amount of the outer pipe 42 increases. Furthermore, for example, when a concave and convex structure such as braille is formed in the container, the mold is adjusted such that a specific portion corresponding to a formation position of the concave and convex structure in the preform 10 faces a portion where the opening amount of the outer pipe 42 increases.

Note that, when the mold is adjusted so as to suppress unevenness of the wall thickness distribution based on the wall thickness distribution of the container, the adjustment may be performed in the same manner as described above by regarding a portion where the wall thickness of the container is small as a portion where the temperature of the preform 10 is high and regarding a portion where the wall thickness of the container is large as a portion where the temperature of the preform 10 is low.

When the mold adjustment step as described above is completed, each step of the blow-molding method described below is executed.

### (Step S101: Injection-molding step)

First, in the injection-molding unit 21, a resin is injected from the injection device 25 into a preform-shaped mold space formed by the injection cavity mold, the injection core mold, and the neck mold 27 of the conveyance mechanism 26, thereby manufacturing the preform 10.

Then, the injection mold of the injection-molding unit 21 is opened after completion of injection (filling and pressure holding) of the resin material or after a minimum cooling time provided after completion of injection.

From the viewpoint of manufacturing the container by a high-speed molding cycle, it is preferable to perform mold opening without providing a cooling time of the preform 10 in the injection mold after completion of injection (filling and pressure holding) of the resin material in step S101.

On the other hand, when the preform 10 is minimally cooled in the injection mold, the time for cooling the resin material (cooling time) after completion of injection of the resin material by the injection-molding unit 21 is preferably 1/2 or less of the time for injecting the resin material (injection time). Furthermore, the cooling time can be made shorter than the time for injecting the resin material depending on the weight of the resin material. For example, the cooling time is more preferably 2/5 or less, still more preferably 1/4 or less, and particularly preferably 1/5 or less with respect to the injection time of the resin material.

In the present embodiment, since there is no cooling time of the preform 10 in the injection mold (or the cooling time is very short), the skin layer (surface layer in a solidified state) of the preform is thin and the core layer (inner layer in a softened state or a molten state) is formed thick as compared with a case where the preform is sufficiently cooled in the injection mold. That is, in the present embodiment, the preform 10 having a large thermal gradient between the skin layer and the core layer and having high residual heat at a high temperature is formed.

When the injection mold is opened in step S101, the preform 10 is released from the injection cavity mold and the injection core mold in a high temperature state in which the outer shape can be maintained. Thereafter, the transfer plate 28 of the conveyance mechanism 26 moves so as to rotate by a predetermined angle, and the preform 10 in the high temperature state held by the neck mold 27 is conveyed to the temperature adjustment unit 22.

### (Step S102: Temperature adjustment step)

Next, in the temperature adjustment unit 22, cooling and temperature adjustment for bringing the temperature of the preform 10 close to a temperature (blow temperature) suitable for the final blow are performed.

In the temperature adjustment unit 22, the temperature of the preform 10 is lowered to the blow temperature, and then the temperature of the preform 10 is maintained at the blow temperature until blow molding is performed. By rapidly cooling the preform at a high temperature by the temperature adjustment unit 22, whitening (becoming clouded) due to spherulite formation crystallization that may occur when the preform is slowly cooled is suppressed.

In the temperature adjustment unit 22, first, the preform 10 is accommodated in the cavity mold 31. Subsequently, the air introduction member 32 is inserted into the neck portion 11 of the preform 10 accommodated in the cavity mold 31. At this time, the neck portion of the preform 10 and the fitting core 41 are brought into close contact with each other to enter a state in which airtightness is maintained therebetween.

Thereafter, cooling blow of the preform 10 is performed. In the cooling blow of the present embodiment, compressed air is introduced into the preform 10 through the opening 42a at the distal end of the outer pipe 42. Then, the compressed air introduced into the preform 10 is exhausted from the opening 41a of the fitting core 41 and the opening 43a of the distal end of the inner pipe 43.

As a result, in the preform 10, a flow of compressed air from the opening 42a of the outer pipe 42 toward the neck portion 11 and a flow of compressed air from the opening 42a of the outer pipe 42 toward the bottom portion 13 are generated, and the preform 10 is cooled from the inside by these flows of compressed air.

In the present embodiment, in the mold adjustment step (S101), a portion where the opening amount of the outer pipe 42 increases faces a specific portion in the circumferential direction of the preform 10. Therefore, a large amount of compressed air flows from the opening 42a of the outer pipe 42 near the specific portion of the preform 10, and is cooled more strongly than the other portion in the circumferential direction.

In addition, the preform 10 in the temperature adjustment unit 22 continues to contact the cavity mold 31 maintained at a predetermined temperature by receiving the pressure of the compressed air from the inside, and heat exchange (that is, cooling and temperature adjustment of the preform 10) is also performed between the preform 10 and the cavity mold 31. As a result, the temperature of the preform 10 is adjusted so as not to become equal to or lower than a temperature suitable for blow molding from the outside, and the uneven temperature generated from injection molding is also reduced. Note that the shape of the preform 10 in the temperature adjustment step is maintained by the cavity mold 31 and does not greatly change.

After the temperature adjustment step, the transfer plate 28 of the conveyance mechanism 26 moves so as to rotate by a predetermined angle, and the preform 10 after the temperature adjustment held in the neck mold 27 is conveyed to the blow-molding unit 23.

### (Step S103: Blow-molding step)

Subsequently, the blow molding of the container is performed in the blow-molding unit 23.

First, the blow cavity mold is closed, the preform 10 is accommodated in the mold space, and an air introduction member (blow core) for supplying blow air is lowered, so that the air introduction member abuts on the neck portion of the preform 10. Then, the preform 10 is laterally axially stretched by supplying blow air from the air introduction member, while the stretching rod (longitudinal axis stretching member) is lowered to hold the bottom portion of the preform 10 from the inner surface and performs longitudinal axis stretching as necessary. As a result, the preform 10 is bulged and shaped so as to be in close contact with the mold space of the blow cavity mold, and is blow-molded in the container. Note that the bottom mold stands by at a lower position not in contact with the bottom portion of the preform 10 before closing the blow cavity mold, and quickly rises to the molding position before closing the mold or after closing the mold.

### (Step S104: Container taking-out step)

When the blow molding is finished, the blow cavity mold and the bottom mold are opened. As a result, the container is movable from the blow-molding unit 23.

Subsequently, the transfer plate 28 of the conveyance mechanism 26 moves so as to rotate by a predetermined angle, and the container is transported to the taking-out unit 24. In the taking-out unit 24, the neck portion of the container is released from the neck mold 27, and the container is taken out to the outside of the blow-molding apparatus 20.

Thus, a series of steps of the blow-molding method is completed. Thereafter, by moving the transfer plate 28 of the conveyance mechanism 26 so as to rotate by a predetermined angle, the respective steps of S101 to S104 described above are repeated. During the operation of the blow-molding apparatus 20, manufacturing of four sets of containers having a time difference of one step is executed in parallel.

Note that, due to the structure of the blow-molding apparatus 20, the times during which the transfer plate is stopped in the injection-molding unit 21, the temperature adjustment unit 22, the blow-molding unit 23, and the taking-out unit 24 are the same in length. Similarly, the conveyance times of the transfer plate 28 between the respective units are the same in length.

Hereinafter, functions and effects of the present embodiment will be described.

In the temperature adjustment unit 22 of the present embodiment, the preform 10 having no cooling time (or very short cooling time) in the injection mold is accommodated in the cavity mold 31, and the preform 10 is cooled and temperature-adjusted by cooling blow in which compressed air is blown into the preform 10 by the air introduction member 32.

The air introduction member 32 includes: an inner pipe 43 that exhausts compressed air from the preform 10; an outer pipe 42 that is disposed on an outer periphery of the inner pipe 43 and forms the opening 42a for supplying compressed air to the preform 10 between the outer pipe 42 and the inner pipe 43; and the spacers 44 that are formed on an outer periphery of the inner pipe 43 and causes the axial center O2 of the inner pipe 43 to be eccentric with respect to the axial center O1 of the outer pipe 42 to change an opening width of the opening 42a in a circumferential direction. Since a difference occurs in the flow rate of the compressed air in the circumferential direction of the preform 10 due to a change in the circumferential direction of the opening width of the opening 42a, it is possible to adjust the temperature for strongly cooling a specific portion in the circumferential direction of the preform 10.

The present invention is not limited to the above embodiments, and various improvements and design changes may be made without departing from the gist of the present invention.

In the above embodiment, the example in which the air introduction member 32 has a triple pipe structure of the fitting core 41, the outer pipe 42, and the inner pipe 43 has been described, but the air introduction member 32 may have a double pipe structure of the outer pipe 42 and the inner pipe 43, and the outer pipe 42 may also function as the fitting core. In this case, the compressed air is introduced from the neck portion side of the preform and exhausted from the inner pipe on the bottom portion side of the preform.

In the above embodiment, the configuration example in which three spacers 44 of the inner pipe 43 are provided in the circumferential direction has been described, but the shape, arrangement, and the like of the spacers 44 are not limited to the above. For example, the number of the spacers 44 may be 2 or 4 or more, and an arc-shaped spacer 44 extending in the circumferential direction or a spacer 44 helically formed on the inner pipe 43 may be used. Furthermore, the spacer 44 may be disposed to be shifted in the axial direction of the inner pipe 43.

In addition, the embodiments disclosed herein are to be considered in all respects as illustrative and not restrictive. The scope of the present invention is indicated not by the above description but by the claims, and it is intended that meanings equivalent to the claims and all modifications within the scope are included.

### Reference Signs List

- 10: Preform
- 20: Blow-molding apparatus
- 21: Injection-molding unit
- 22: Temperature adjustment unit
- 23: Blow-molding unit
- 31: Cavity mold
- 32: Air introduction member
- 41: Fitting core
- 42: Outer pipe
- 42a: Opening
- 43, 43': Inner pipe
- 44, 44': Spacer

## Claims

1. A temperature adjustment mold for adjusting a temperature of an injection-molded bottomed preform made of resin, the temperature adjustment mold comprising:
an air introduction unit that is inserted into the preform and cools the preform by introducing compressed air into an interior of the preform; and
a cavity mold that accommodates the preform inside and performs heat exchange in contact with an outer peripheral surface of the preform into which the compressed air has been introduced,
wherein
the air introduction unit includes:
an inner pipe that exhausts the compressed air from the preform;
an outer pipe disposed on an outer periphery of the inner pipe and forming an air supply port for supplying the compressed air to the preform between the outer pipe and the inner pipe; and
a positioning portion that is formed on the outer periphery of the inner pipe and causes an axial center of the inner pipe to be eccentric with respect to an axial center of the outer pipe to change an opening width of the air supply port in a circumferential direction.

2. The temperature adjustment mold according to claim 1, wherein
the inner pipe includes a plurality of the positioning portions that abuts on the outer pipe with different eccentricity amounts, and
the opening width of the air supply port is adjusted by changing the positioning portion of the inner pipe abutting on the outer pipe.

3. The temperature adjustment mold according to claim 1, wherein
the inner pipe is replaceable with respect to the outer pipe, and
the opening width of the air supply port is adjusted by replacement of the inner pipe in which the positioning portion is different.

4. A manufacturing apparatus for a resin container, the manufacturing apparatus comprising:
an injection-molding unit that injection-molds a preform made of resin;
a temperature adjustment unit that has the temperature adjustment mold according to claim 2 or 3 and adjusts a temperature of the preform that has been manufactured by the injection-molding unit; and
a blow-molding unit that blow-molds the preform that has been adjusted in temperature to manufacture a resin container.

5. A manufacturing method for a resin container using the manufacturing apparatus according to claim 4, the manufacturing method comprising:
a mold adjustment step of adjusting the opening width and a position in a circumferential direction of the air supply port in the temperature adjustment mold;
an injection-molding step of injection-molding the preform;
a temperature adjustment step of adjusting a temperature of the preform that has been manufactured in the injection-molding step; and
a blow-molding step of blow-molding the preform that has been adjusted in temperature to manufacture a resin container,
the injection-molding step, the temperature adjustment step, and the blow-molding step being performed after the mold adjustment step.
